# EUROPÄISCHE PATENTSCHRIFT

(11) **EP 3 250 339 B1**
(45) Veröffentlichungstag und Bekanntmachung des Hinweises auf die Patenterteilung: **05.09.2018**
(21) Anmeldenummer: 15816366.7
(22) Anmeldetag: 19.12.2015
(51) Int. Cl.: B23K 9/32, F23D 14/50

(54) **REINIGUNGSVORRICHTUNG FÜR EINE MECHANISCHE REINIGUNG EINER GASDÜSE EINES SCHUTZGAS-SCHWEISSBRENNERS**
CLEANING DEVICE FOR MECHANICALLY CLEANING A GAS NOZZLE OF A GAS-SHIELDED WELDING TORCH
DISPOSITIF DE NETTOYAGE MÉCANIQUE D'UNE BUSE DE GAZ D'UN CHALUMEAU DE SOUDAGE À PROTECTION DE GAZ

(30) Priorität: 31.01.2015 DE 102015001246
(43) Veröffentlichungstag der Anmeldung: 06.12.2017
(73) Patentinhaber: Audi AG, 85045 Ingolstadt (DE)
(72) Erfinder: DENZER, Klaus, 74189 Weinsberg (DE)
(74) Vertreter: Eickmeyer, Dietmar
(86) Internationale Anmeldenummer: PCT/EP2015/002568
(87) Internationale Veröffentlichungsnummer: WO 2016/119809

(56) Entgegenhaltungen:
- EP-A1- 0 090 233
- WO-A1-92/05007
- DE-A1- 3 244 993
- DE-U1-202007 014 659

## Beschreibung

Die Erfindung betrifft eine Reinigungsvorrichtung für eine mechanische Reinigung einer Gasdüse eines Schutzgas-Schweißbrenners, insbesondere eines CMT+ Brenners (von Cold Metal Transfer) nach dem Oberbegriff des Anspruchs 1, siehe z.B. EP 0 090 233 B1. Ein Schutzgas-Schweißbrenner für eine bekannte Vorrichtung zu dessen Reinigung besteht aus einem beim Schweißen einen Schweißdraht führenden Kontaktrohr und einer dieses mit Abstand umgebender, rohrförmiger, ein inertes Schutzgas führender Gasdüse. Die Gasdüse weist eine sich konisch verjüngende Gasdüsenspitze auf. Zudem ist auch das Kontaktrohr endseitig als Kegelstumpf konisch verjüngt ausgebildet.

Diese bekannte Reinigungsvorrichtung weist einen gesteuert drehangetriebenen Reinigungskopf mit wenigstens einem mitdrehenden Reinigungsorgan auf, sowie eine Zuführ- und Zentriereinrichtung für eine koaxiale Positionierung der Gasdüse bezüglich der Drehachse des Reinigungskopfs im Bereich des wenigstens einen Reinigungsorgans.

Konkret wird hier die zu reinigende Gasdüse bis zu einem Anschlag in eine verdrehfest angeordnete Düsenfassung eingesteckt und dadurch zentriert. Zugleich werden damit Räumflügel in den Innenbereich der Gasdüse eingeführt, welche an der Außenfläche des Kontaktrohrs und der Innenfläche der Gasdüse bei einem drehenden Reinigungskopf gleitend und schabend angepresst werden. Dadurch sollen diese Flächen von Schmauch und Schweißspritzern gereinigt werden. Als Räumflügel werden hier federvorgespannte Schaberelemente verwendet. Zudem kann auch ein schwenkbar gelagerter Winkelhebel verwendet werden, dessen Schaberfläche durch Zentrifugalkraft radial nach innen zur Reinigung des Kontaktrohrs auf dieses gepresst wird. Dieser Winkelhebel ist zudem mittels einer Feder mit einem weiteren Räumflügel gekoppelt, der zur Reinigung der Innenseite der Gasdüse eingesetzt ist. Diese konkrete Anordnung scheint nicht praktikabel zu sein, da ohne Drehbewegung und ohne Zentrifugalkraft die in die Gasdüse einzuführenden Räumflügelbereiche weiter als die Gasdüsenöffnung aufgespreizt sind, so dass nicht erkennbar ist, wie diese Bereiche ohne zusätzliche Maßnahmen ohne Kollision mit der Gasdüse in diese eingeführt werden können, wenn die Gasdüse in die Düsenfassung eingesetzt wird.

Zudem ist als spezielle Art eines Schutzgas-Schweißverfahrens ein CMT-Schweißen (von cold metal transfer) bekannt, welches insbesondere als CMT Braze+-Verfahren für das CMT-Löten im Karosseriebau einsetzbar ist. Dazu wird eine extrem schmale konische Bauform einer Gasdüse verwendet, wodurch das Schutzgas mit hoher Geschwindigkeit austritt und eine Einschnürung des Lichtbogens bewirkt, sodass eine hohe Lötgeschwindigkeit bei einem reduzierten Gasverbrauch erreichbar ist.

Durch die extrem konische Bauform einer solchen Gasdüse sind die einen Hinterschnitt ausbildenden Innenflächen der Gasdüse praktisch nur schwer erreichbar und damit mechanisch nur schwierig zu reinigen. Daher wird derzeit eine aufwendige Ultraschallreinigung eingesetzt. Bei robotergestützten Schweiß-/Lötverfahren und einer verfahrensintegrierten automatischen Reinigung ist eine Ultraschallreinigung bei hohen Investitionskosten besonders aufwändig und kostenintensiv.

Aufgabe der Erfindung ist es daher, eine gattungsgemäße Reinigungsvorrichtung für eine mechanische Reinigung einer Gasdüse eines Schutzgas-Schweißbrenners, insbesondere eines CMT+ Brenners so weiterzubilden, dass eine einfache mechanische Reinigung bei einfacher Automatisierbarkeit und einem einfachen kostengünstigen Aufbau der Reinigungsvorrichtung möglich ist.

Diese Aufgabe wird mit den Merkmalen des Anspruchs 1 gelöst.

Gemäß Anspruch 1 weist die Reinigungsvorrichtung einen gesteuert drehangetriebenen Reinigungskopf mit wenigstens einem mitdrehenden Reinigungsorgan sowie eine Zuführ- und Zentriereinrichtung für eine koaxiale Positionierung der Gasdüse im Bereich des oder der Reinigungsorgane auf. Das Reinigungsorgan ist erfindungsgemäß eine Reinigungsschere mit zwei Reinigungsarmen, an welche an einem quer zur Drehachse angeordneten Schwenklager im Reinigungskopf scherenförmig, freischwingend aufgehängt sind. An den Reinigungsarmen sind jeweils an den gasdüsenabgewandten Endbereichen Fliehkraftgewichte angeordnet, so dass bei einer Reinigungskopfrotation die Reinigungsschere bzw. deren Reinigungsarme durch die Zentrifugalkraft aufgespreizt werden.

Weiter weisen die Reinigungsarme jeweils an den gasdüsenzugewandten, oberen Endbereichen Schaberstrukturen auf, die im zusammengeklappten Zustand der Reinigungsschere in die Gasdüse eingeführt werden. Bei einem Aufspreizen der Reinigungsschere durch eine Reinigungskopfrotation werden die Schaberstrukturen an der Gasdüseninnenfläche der verdrehfest gehaltenen Gasdüse gleitend und schabend für eine Reinigungsfunktion angepresst. Damit können insbesondere Schmauch und Schweißspritzer entfernt werden.

Die oberen Endbereiche der Reinigungsschere mit den Schaberstrukturen können aufgrund des verwendeten Scherenprinzips einfach so gestaltet werden, dass sie im zusammengeklappten Zustand der Reinigungsschere kleiner als die Gasdüsenöffnung sind und damit eine einfache und gegebenenfalls automatisierbare Einführung in die Gasdüse bzw. ein Aufstecken der Gasdüse möglich ist. Das Aufspreizen der Reinigungsschere und der damit verbundene Reinigungsvorgang wird einfach nur mittels der Reinigungskopfrotation und der Zentrifugalkraft der Fliehkraftgewichte ohne zusätzliche Stellvorrichtungen ausgeführt, so dass sowohl der Aufbau der Vorrichtung als auch der Betrieb einfach, funktionssicher und kostengünstig durchführbar ist.

Grundsätzlich kann die vorstehende Reinigungsvorrichtung für unterschiedliche Ausführungen von Gasdüsen verwendet werden. Besonders geeignet ist die erfindungsgemäße Reinigungsvorrichtung für eine Gasdüse mit einer sich extrem konisch verjüngenden Gasdüsenspitze, wie sie beim CMT Braze+-Verfahren eingesetzt wird. Konkret sollen hier die Reinigungsarme der Reinigungsschere als Flachstabelemente und die Schaberstrukturen jeweils als in Aufspreizrichtung gerichtete Schaberkanten, gegebenenfalls als wechselbare Klingen ausgebildet sein. Diese Schaberkanten bzw. wechselbare Klingen sollen dabei so geformt sein, dass die rotierenden, in die Gasdüsenspitze eingeführten Schaberkanten einen virtuellen Rotationskörper entsprechend der konischen Gasdüseninnenfläche ausbilden, wodurch eine vollflächige Anlage und Reinigung der Gasdüseninnenfläche möglich ist.

Sowohl die am Schwenklager befestigten Reinigungsarme, als auch gegebenenfalls die als Klingen ausgeführten Schaberkanten, können auswechselbar angebracht sein, so dass unterschiedliche Gestaltungen und Anpassungen an unterschiedliche Gasdüsenformen möglich sind. Zudem können durch unterschiedliche Gewichte, insbesondere unterschiedliche Fliehkraftgewichte gegebenenfalls in Verbindung mit unterschiedlichen Drehzahlen des Reinigungskopfs unterschiedliche Anpressdrücke auf die Gasdüseninnenflächen für variierende Reinigungsaufgabe eingestellt werden.

In einer vorteilhaften Weiterbildung ist jeweils anschließend an die Schaberkante bzw. an eine auswechselbare Klinge oder gegebenenfalls in eine solche integriert an der gasdüsenabgewandten Seite ein in Aufspreizrichtung vorspringender Schaberabsatz geformt. Ein solcher Schaberabsatz ist jeweils so angeordnet und geformt, dass er bei einer Rotation des Reinigungskopfs und bei einer positionierten Gasdüse an der Stirnseite der Gasdüsenspitze gleitend und schabend für eine Reinigung angepresst wird. Somit wird bei einer solchen Ausführung sowohl die Gasdüseninnenseite als auch deren Stirnseite,gereinigt.

Zur Aufbringung einer relativ hohen Reinigungsanpresskraft in Verbindung mit einer geeigneten Spreizgeometrie wird vorgeschlagen, dass die vom Schwenklager ausgehenden, gasdüsenzugewandten Hebelarmteile der Reinigungsarme wesentlich kürzer, vorzugsweise einen Faktor 2 bis 5 kürzer als die vom Schwenklager ausgehenden gasdüsenabgewandten Hebelarmteile sind.

Zur Verstärkung der mittels der Fliehkraftgewichte erzeugbaren Zentrifugalkräfte können diese freischwingend mit den Reinigungsarmen vorzugsweise am in Aufspreizrichtung abgekröpften Endbereichen mittels achsparallel zum Schwenklager der Reinigungsarme ausgerichteten Schwenkachsen verbunden werden.

In einer konstruktiv einfachen, zweckmäßigen und funktionstüchtigen Ausführungsform kann der Reinigungskopf als Hohlkörper topfförmig oder käfigförmig ausgebildet sein mit einer bodenseitig zentral angeordneten Antriebswelle. Als daran angeschlossene Drehantriebe können an sich bekannte, handelsübliche Motore, insbesondere Elektromotore oder Luftmotore oder Hydraulikmotore verwendet werden.

Bei einer solchen Ausführungsform ist die Reinigungsschere im Innenraum des Hohlkörpers in Richtung der Drehachse angeordnet. Der Hohlkörper weist zudem eine Oberwand mit einer zentralen Einführöffnung auf, durch die die Gasdüse mit der sich konisch verjüngenden Gasdüsenspitze in den Bereich der Schaberstrukturen der Reinigungsschere in eine definierte Reinigungsposition einführbar ist.

Vorteilhaft können an einer solchen Oberwand im Bereich der Einführöffnung radial nach innen gerichtete Borsten, vorzugsweise Kunststoffborsten, zur Ausbildung eines rotierenden Bürstenrings einer Kunststoffbürste angeordnet sein. Die Borsten weisen dabei vorteilhaft eine Borstenlänge auf, die der Konizität der Gasdüse angepasst ist, so dass in der Reinigungsposition der Gasdüse der rotierende Bürstenring flächig an der Gasdüsenaußenfläche anliegt und für die Reinigung angepresst wird. Bei einer solchen Ausführungsform wird somit zusätzlich zur Gasdüseninnenfläche und gegebenenfalls zur Gasdüsenstirnseite auch die Gasdüsenaußenfläche gereinigt.

Bei einer besonders bevorzugten vorteilhaften Weiterbildung ist zudem auf der Oberwand ein Zentrierhilfebauteil verdrehfest, das heißt nicht mit dem Reinigungskopf mitdrehend, angeordnet und gelagert. Dieses Zentrierhilfebauteil weist eine zentrale konische, der konischen Gasdüsenaußenfläche angepasste Zentrierhilfeöffnung auf, dergestalt, dass bei einer flächigen Anlage der Gasdüse in der Zentrierhilfeöffnung eine vorgegebene definierte Reinigungsposition erreicht ist und gehalten wird. Diese vorgegebene Reinigungsposition ist in Verbindung mit der Geometrie der Gasdüse der zugeordneten Ausgestaltung der Reinigungsschere und deren Kinematik angepasst.

Bei automatisierten Schweiß-/Lötverfahren werden die Bewegungsabläufe programmiert und mittels Robotern ausgeführt, an deren Roboterarmen die Schweißbrenner und damit die Gasdüsen angeordnet sind. Vorteilhaft kann damit nach vorbestimmten Schweiß-/Lötzyklen auch automatisch die Reinigungsvorrichtung angefahren werden. Vorteilhaft kann dabei durch das vorstehende Zentrierhilfebauteil ein unsymmetrisches oder verkipptes Einfahren der Gasdüse in ihre Reinigungsposition minimiert/begrenzt werden. Zudem wirkt die konisch sich verjüngende Zentrierhilfeöffnung für die Gasdüse als Anschlag in die Einführrichtung, wodurch ein zu tiefes Eintauchen der Gasdüse in das Reinigungssystem verhindert wird, was ansonsten zu einem Blockieren der Drehbewegung und/oder zu einer zu starken Abnützung der Reinigungsflächen und/oder Schaberstrukturen führen könnte.

Das Zentrierhilfebauteil kann zudem vorteilhaft als Programmierhilfe verwendet werden, da damit einem Programmierer die richtige Reinigungsposition und Schaltposition für das Einschalten der Drehbewegung des Reinigungskopfs angegeben wird.

Das Zentrierhilfebauteil kann vorteilhaft Bestandteil eines verdrehfesten Außenbehälters sein, der zudem über einer Schmutzauffangwanne angeordnet ist.

Mit einer zentralen Scherenabstützung kann die Scherenöffnungsweite in der nicht rotierenden Grundstellung vorgegeben werden.

Als weitere Programmierhilfe wird nicht unmittelbar die konische Zentrierhilfeöffnung verwendet, sondern ein in die Zentrieröffnung formschlüssig eingelegter Einlegetrichter bestimmter Wandstärke entsprechend einem definierten Spaltabstand zwischen der Zentrierhilfeöffnung und einer eingeführten Gasdüse. Der Einlegetrichter kann dabei wegen einer verbesserten Sicht vorzugsweise aus einer Halbschale gebildet sein. Dieser Spaltabstand kann insbesondere als Einschaltpunkt für den Drehantrieb des Reinigungskopfs bei einer Programmierung verwendet werden, so dass vorteilhaft der Reinigungskopf bereits kurz vor der Bearbeitung der zu reinigenden Flächen drehangetrieben wird. Weiter kann dieser Spaltabstand als Programmierhöhe für die Zuführung der Gasdüse zum Reinigungskopf mittels eines Schweißroboters verwendet werden. Im Betriebsfall (bei entferntem Einlegetrichter) kann dann nach Erreichen dieser Programmierhöhe das Erreichen der Endstellung und Reinigungsposition der Gasdüse im Zentrierhilfebauteil mit geringer Geschwindigkeit und geringer Kraftaufbringung programmiert werden, insbesondere um Beschädigungen zu vermeiden.

Eine weitere Maßnahme, um Beschädigungen der Reinigungsvorrichtung und/oder der Gasdüse vorzubeugen, kann je nach den speziellen Gegebenheiten dadurch realisiert werden, dass die Reinigungsvorrichtung, insbesondere der Außenbehälter in Einführrichtung der Gasdüse nachgiebig, insbesondere federnd oder luftgelagert mit einem ortsfesten Bauteil verbunden ist. Dieses ortsfeste Bauteil kann als Basisteil beispielsweise ein Traggestell sein.

Anhand einer Zeichnung wird die Erfindung weiter erläutert.

Es zeigen:
- Fig. 1: einen schematischen Längsschnitt durch einen Reinigungskopf einer Reinigungsvorrichtung mit einem in ein Zentrierhilfebauteil eingesetzten Einlegetrichter und eine darin positionierte Gasdüsenspitze,
- Fig. 2: eine Draufsicht und einen Querschnitt durch das Zentrierhilfebauteil,
- Fig. 3: eine Draufsicht und einen Querschnitt durch eine Halbschale des Einlegetrichters,
- Fig. 4: eine Ansicht des Reinigungskopfs entsprechend Fig. 1 mit gleicher Position der Gasdüsenspitze ohne Einlegetrichter vor der Einschaltung eines Drehantriebs,
- Fig. 5: eine Ansicht nach Fig. 4 nach Einschaltung des Drehantriebs,
- Fig. 6: eine Ansicht entsprechend Fig. 5 mit der Gasdüsenspitze in ihrer voll in das Zentrierhilfebauteil eingefahrenen Reinigungsposition, und
- Fig. 7: eine Ansicht entsprechend Fig. 4 mit Ergänzungen und Konkretisierungen insbesondere des Zentrierhilfebauteils.

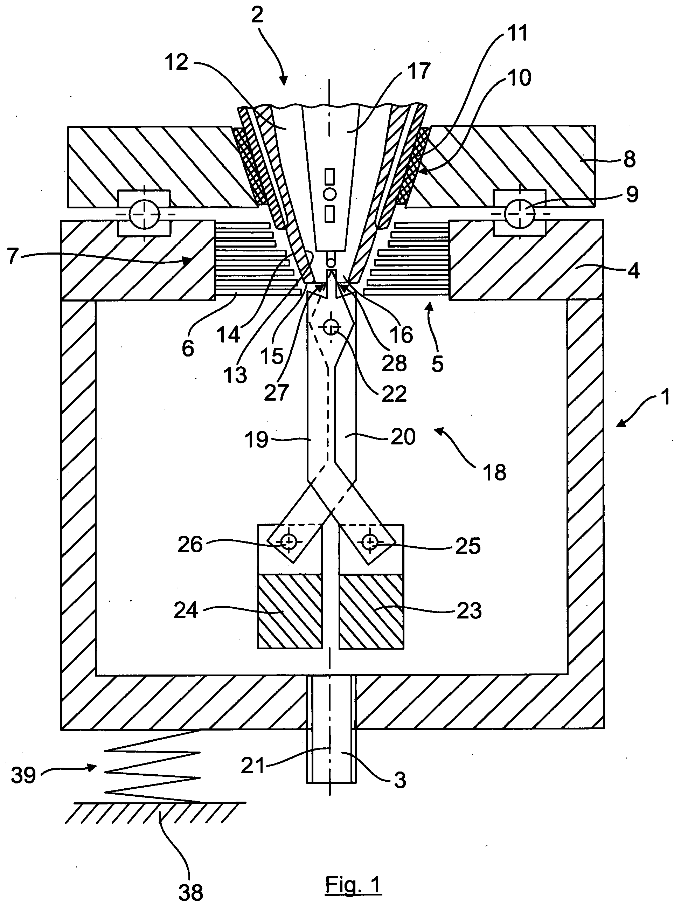

In Fig. 1 ist ein Querschnitt durch einen Reinigungskopf 1 einer nicht weiter dargestellten Reinigungsvorrichtung für eine mechanische Reinigung einer Gasdüse 2 eines Schutzgas-Schweißbrenners, insbesondere eines CMT+ Brenners dargestellt. Der Reinigungskopf 1 ist als zylindrischer Hohlkörper topfförmig oder käfigförmig ausgebildet und ist über eine bodenseitige zentrale Antriebswelle 3 mittels eines (nicht gezeigten) steuerbaren Drehantriebs rotierbar. Eine Oberwand 4 des Reinigungskopfs 1 weist eine zentrale Einführöffnung 5 auf, wobei mit nach radial innen gerichteten Kunststoffborsten 6 ein konisch gestalteter Bürstenring 7 ausgebildet ist.

Auf der Oberwand 4 ist ein Zentrierhilfebauteil 8 mittels eines Kugel- oder Kegellagerrings 9 dergestalt gelagert, dass bei einer Rotation des Reinigungskopfhohlkörpers das Zentrierhilfebauteil 8 durch eine nicht dargestellte Verbindung mit einem ortsfesten Gestell oder Gehäuse verdrehfest gehalten ist.

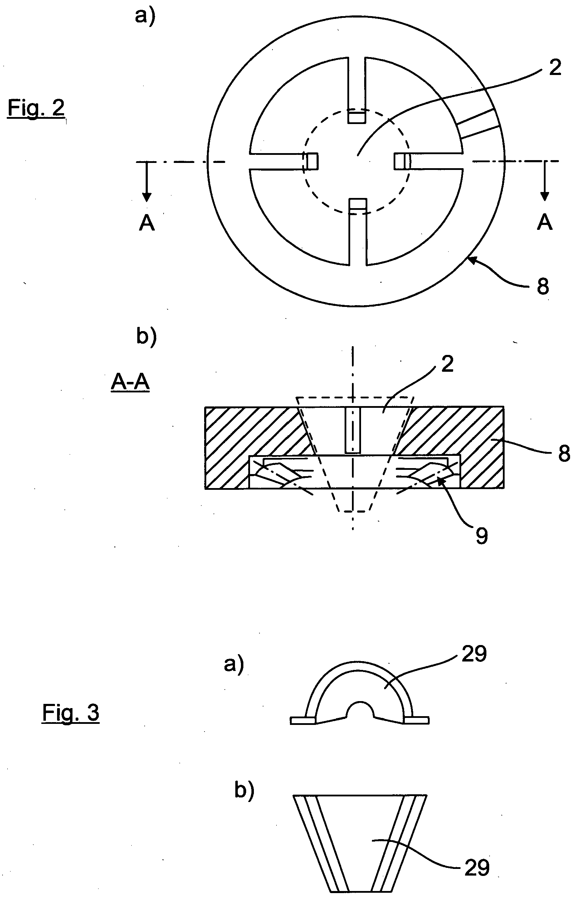

Das Zentrierhilfebauteil 8 weist eine sich konisch nach unten verjüngende Zentrierhilfeöffnung 10 auf, in die formschlüssig ein Einlegetrichter 11 (siehe Fig. 3) eingesetzt ist. In den Einlegetrichter 11 ist wiederum formschlüssig die Gasdüse 2 mit ihrer sich stark konisch verjüngenden Gasdüsenspitze 12 eingesteckt.

Die Gasdüsenspitze 12 weist an ihrem vorderen offenen Endbereich eine zu reinigende Gasdüseninnenfläche 13, eine Gasdüsenaußenfläche 14 und eine Gasdüsenstirnfläche 15 auf. In der Gasdüse 2 ist zudem zentral ein bis kurz vor die Gasdüsenöffnung 16 reichendes Kontaktrohr 17 angeordnet.

Zur Reinigung der Gasdüseninnenfläche 13 ist als Reinigungsorgan eine Reinigungsschere 18 eingesetzt mit zwei Reinigungsarmen 19, 20, welche an einem quer zur Drehachse 21 angeordneten Schwenklager 22 des Reinigungskopfs 1 scherenförmig frei schwingend aufgehängt sind.

Die Reinigungsarme 19, 20 sind gegeneinander aufspreizbare Flachstabelemente mit in Aufspreizrichtung abgekröpften Endbereichen, an denen jeweils Fliehkraftgewichte 23, 24 freischwingend mittels Schwenkachsen 25, 26 achsparallel zum Schwenklager 22 befestigt sind.

Ersichtlich sind die vom Schwenklager 22 ausgehenden gasdüsenzugewandten oberen Hebelarmteile der Reinigungsarme 19, 20 wesentlich kürzer als die vom Schwenklager 22 ausgehenden gasdüsenabgewandten unteren Hebelarmteile der Reinigungsarme 19, 10.

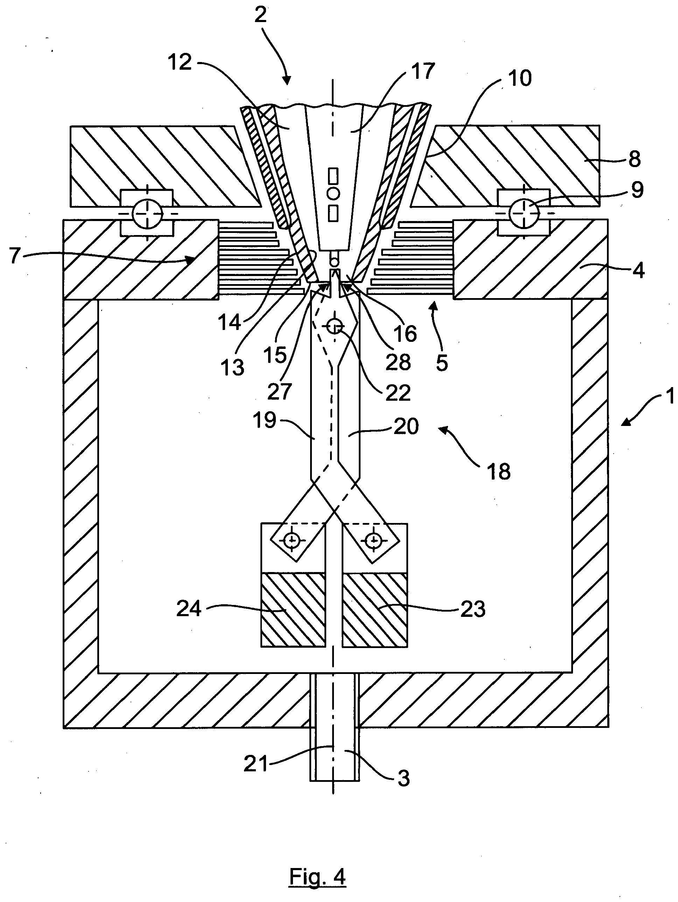

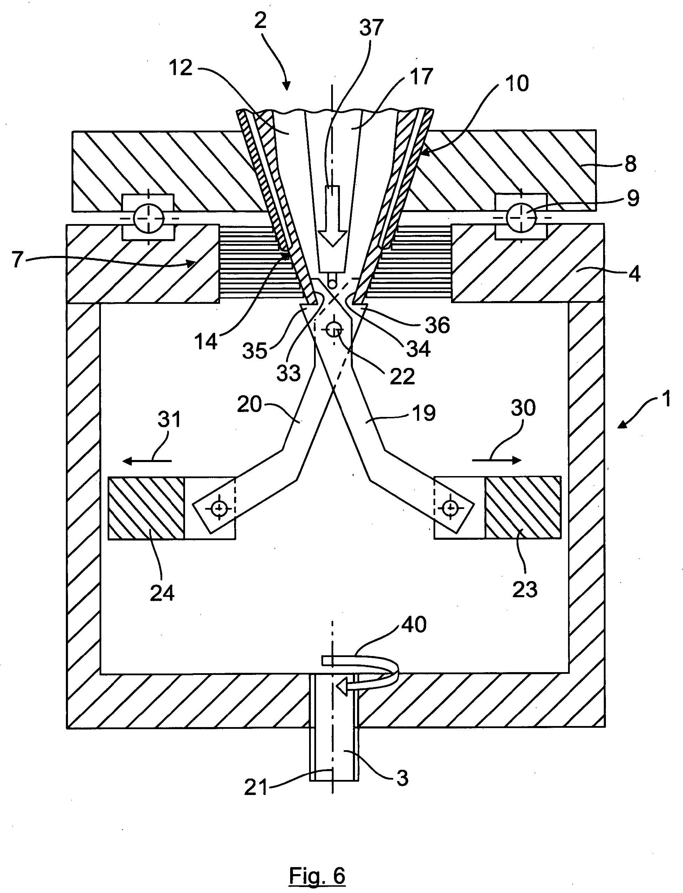

Die Reinigungsarme 19, 20 weisen an den gasdüsenzugewandten oberen Endbereichen jeweils Schaberstrukturen 27, 28 auf, deren Gestalt und Funktion in Verbindung mit Fig. 6 näher erläutert wird. Aus Fig. 1 (und Fig. 4) ist jedenfalls ersichtlich, dass bei der dargestellten Grundstellung der Reinigungsschere (ohne Rotation des Reinigungskopfs 1) die Schaberstrukturen 27, 28 in die Gasdüsenöffnung 16 einführbar sind.

In Fig. 2a ist eine Draufsicht auf das ringförmig ausgeführte Zentrierhilfebauteil 8 mit einer zentral an einem Stützkreuz einliegenden Gasdüse 2 dargestellt. In Fig. 2b ist ein Querschnitt entlang der Linie A-A gezeigt, in dem der Lagerring 9 schematisch angegeben ist, mittels dem das Zentrierhilfebauteil 8 bezüglich des rotierenden Reinigungskopfs 1 verdrehfest fixiert ist. Durch die Freiräume zwischen den Streben des Stützkreuzes ist ein guter Einblick insbesondere für Programmierungen auf die Gasdüse 2 möglich.

In Fig. 3a ist eine Draufsicht und in Fig. 3b eine Seitenansicht des als Halbschale 29 ausgebildeten Einlegetrichters 11 dargestellt.

Fig. 4 entspricht Fig. 1, wobei in einem dargestellten Betriebsfall bei entferntem Einlegetrichter 11 durch einen Roboter die Gasdüse 2 in die Lage entsprechend Fig. 1 in das Zentrierhilfebauteil 8 eingeführt worden ist. Unter Zuhilfenahme des Einlegetrichters 11 und der damit definierten Gasdüsenposition wurde ein Einschaltpunkt zum automatischen Einschalten des (nicht dargestellten) Antriebsmotors für den Drehantrieb des Reinigungskopfs 1 festgelegt. Fig. 4 zeigt den Augenblick des Einschaltens bei noch nicht rotierendem Reinigungskopf 1.

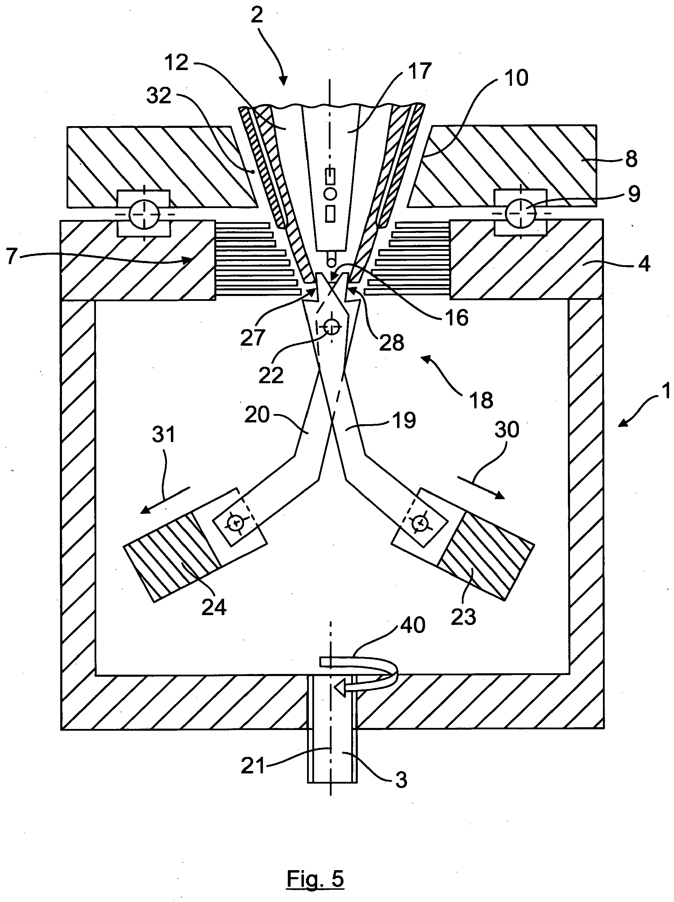

Fig. 5 zeigt den Zustand kurz nach dem Einschalten des Drehantriebs bei bereits rotierendem Reinigungskopf 1 (Drehpfeil 40) Das Schwenklager 22 ist mit dem Reinigungskopf 1 mitdrehend angebracht, so dass durch die Rotation eine Zentrifugalkraft auf die Fliehkraftgewichte 23, 24 wirkt (Pfeile 30, 31) und die Reinigungsschere 18 mit den Reinigungsarmen 19, 20 dadurch aufgespreizt wird. Damit gelangen die oberen Bereiche der Schaberstrukturen 27, 28 bereits in der Gasdüsenöffnung 16 zur Anlage, obwohl die Gasdüsenspitze 12 noch nicht formschlüssig in die Zentrierhilfeöffnung 10 eingeführt ist sondern noch ein definierter Spaltabstand 32 besteht, der als Einschaltposition für eine automatische Einschaltung des Drehantriebs verwendet wurde.

In Fig. 6 wurde bei bereits rotierendem Reinigungskopf 1 die Gasdüsenspitze 12 bereits durch den Roboter formschlüssig ganz in Richtung der Drehachse 21 in die konische Zentrierhilfeöffnung 10 bei bereits drehendem Reinigungskopf 1 eingeführt.

Dadurch kommt der Bürstenring 7 zur Anlage für eine Reinigung der Gasdüsenaußenfläche 14.

In Fig. 6 ist die konkrete Ausbildung der Schaberstrukturen 27, 28 in ihrer Funktionsstellung deutlich sichtbar. Zur Reinigung der Gasdüseninnenfläche 13 im Endbereich der Gasdüsenspitze 12 sind an den Reinigungsarmen 19, 20 Schaberkanten 33, 34 angebracht, die so angestellt sind dass sie bei rotierendem Reinigungskopf 1 einen virtuellen konischen Drehkörper bilden, der der Konizität der zu reinigenden Gasdüseninnenfläche 13 entspricht, wenn die Gasdüsenspitze 12 formschlüssig in der Zentrierhilfeöffnung 10 einliegt und die Reinigungsschere 18, wie in Fig. 6 gezeigt, entsprechend aufgespreizt ist.

Zudem ist anschließend an die Schaberkanten 33, 34 jeweils ein in die Aufspreizrichtung vorspringender Schaberabsatz 35, 36 vorgesehen, der so angeordnet ist, dass er bei der in Fig. 6 dargestellten Reinigungsposition der Gasdüsenspitze 12 jeweils zur Reinigung an der Gasdüsenstirnfläche 15 anliegt.

Nach einer vorbestimmten Rotationszeit und damit Reinigungszeit des Reinigungskopfs 1 kann die Gasdüse 2 robotergestützt wieder entgegen der Einführrichtung (Einführpfeil 37) herausbewegt werden und ist damit für eine weitere vorgegebene Anzahl von Schweißzyklen präpariert, nach denen die Gasdüse 2 wieder robotergestützt der Reinigungsvorrichtung zugeführt wird.

Je nach den Gegebenheiten kann der Reinigungskopf 1 mit dem Zentrierhilfebauteil 8 bezüglich einer festen Abstützung 38 zur sicheren Vermeidung von Beschädigungen beim Einführen der Gasdüse 2 nachgiebig abgestützt werden, wie dies schematisch in Fig. 1 durch eine Feder 39 dargestellt ist.

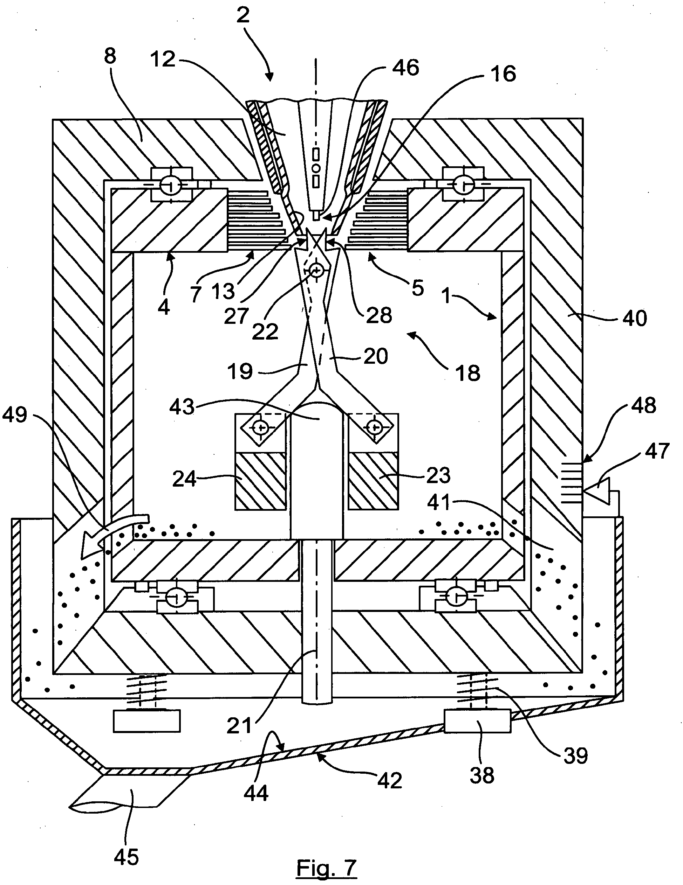

Fig. 7 zeigt eine Ansicht einer Reinigungsvorrichtung mit Ergänzungen und Konkretisierungen insbesondere des Zentrierhilfebauteils 8 in einem Zustand vor dem Einschalten des Drehantriebs bei nicht rotierendem Reinigungskopf 1 etwa entsprechend Fig. 4. Das Zentrierhilfebauteil 8 ist Bestandteil eines den Reinigungskopf 1 umgebenden, verdrehfesten Außenbehälters 40, in dem der Reinigungskopf 1 rotierbar gelagert ist. Aus dem rotierenden Reinigungskopf 1 wird durch Zentrifugalkraft Abtrieb-Schmutz seitlich ausgetragen (Pfeil 49). Der Außenbehälter 40 ist hier topfförmig ausgebildet und weist an den Seitenwänden Wandöffnungen 41 für eine Schmutzabführung auf in eine Schmutzauffangwanne 42, die unter dem Außenbehälter 40 angeordnet ist. Die Schmutzauffangwanne 42 ist mit einer integrierten Rutsche 44 für den anfallenden Schmutz ausgerüstet, die in ein Abführrohr 45 mündet.

Der verdrehfeste Außenbehälter 40 dient einerseits als Halterung und Abstützung für den Reinigungskopf 1 und andererseits als Arbeits- und Berührungsschutz für den darin rotierenden Reinigungskopf 1. Dazu kann der Außenbehälter 40 topfförmig geschlossen oder gegebenenfalls als engmaschiger Käfig ausgeführt sein.

Weiter ist hier ergänzend im Reinigungskopf 1 eine zentrale vorzugsweise austauschbare Scherenabstützung 43 angeordnet, mit der bei nicht rotierendem Reinigungskopf 1 die Scherenöffnungsweite in der Grundstellung vorgegeben wird. Dazu liegen die unteren Bereiche der Reinigungsarme 19, 20 bereits etwas aufgespreizt an einem oberen gewölbten Ende der Scherenabstützung 43 an, sodass die oberen gasdüsenzugewandten Endbereiche mit den Schaberstrukturen 27, 28 soweit aufgespreizt sind, dass sie einerseits in die Gasdüsenöffnung 16 einführbar sind aber andererseits nicht mit einem Schweißdraht 46 kollidieren können. Die Scherenabstützung 43 kann zur Anpassung der Scherengeometrie an unterschiedliche Gasdüsen 2 unterschiedliche Gestalten aufweisen und austauschbar ausgeführt sein.

Der Außenbehälter 40 ist hier vertikal in Einführrichtung der Gasdüse 2 nachgiebig mittels Federn 39 an ortsfesten Basisteilen 38 abgestützt (wie dies schematisch bereits in Fig. 1 angegeben ist). Damit kann die Gegenkraft mit der die im Zentrierhilfebauteil 8 einliegende Gasdüse 2 abgestützt wird für eine feste Abstützung und zur sicheren Vermeidung von Beschädigungen eingestellt werden. Ein ortsfester Markierungspfeil 47, hier an der ortsfesten Schmutzauffangwanne 42 befestigt, kann in Verbindung mit einer Messskala 48 am Außenbehälter 40 zur Bestimmung der Federgegenkraft verwendet werden.

## Patentansprüche

1. Reinigungsvorrichtung für eine mechanische Reinigung einer Gasdüse (2) eines Schutzgas-Schweißbrenners,
mit einem gesteuert drehangetriebenen Reinigungskopf (1) mit wenigstens einem mitdrehenden Reinigungsorgan, und
mit einer Zuführ- und Zentriereinrichtung für eine koaxiale Positionierung der Gasdüse (2) bezüglich der Drehachse (21) des Reinigungskopfs (1) im Bereich des wenigstens einen Reinigungsorgans,
**dadurch gekennzeichnet,**
**dass** das Reinigungsorgan eine Reinigungsschere (18) mit zwei Reinigungsarmen (19, 20) ist, welche an einem quer zur Drehachse (21) angeordneten Schwenklager (22) im Reinigungskopf (1) scherenförmig, frei schwingend aufgehängt sind,
**dass** an den Reinigungsarmen (19, 20) jeweils an den gasdüsenabgewandten unteren Endbereichen Fliehkraftgewichte (23, 24) angeordnet sind, so dass bei einer Reinigungskopfrotation die Reinigungsschere (18) aufgespreizt wird,
**dass** die Reinigungsarme (19, 20) jeweils an den gasdüsenzugewandten oberen Endbereichen Schaberstrukturen (27, 28) aufweisen, die im zusammengeklappten Zustand der Reinigungsschere in die Gasdüse (2) eingeführt werden und die bei einem Aufspreizen der Reinigungsschere (18) durch eine Reinigungskopfrotation an der Gasdüseninnenfläche (13) der verdrehfest gehaltenen Gasdüse (2) gleitend und schabend angepresst werden.

2. Reinigungsvorrichtung nach Anspruch 1, **dadurch gekennzeichnet, dass** die Gasdüse (2) eine sich extrem konisch verjüngende Gasdüsenspitze (12) mit einer entsprechend hinterschnittenen, konischen Gasdüseninnenfläche (13) aufweist, und
dass die Reinigungsarme (19, 20) Flachstabelemente sind und die Schaberstrukturen (27, 28) jeweils eine in Aufspreizrichtung gerichtete Schaberkante (33, 34), gegebenenfalls als wechselbare Klinge, aufweisen dergestalt,
dass die rotierenden Schaberkanten (33, 34) im in die Gasdüsenspitze (12) eingeführten Zustand für eine vollflächige Reinigung einen virtuellen Rotationskörper entsprechend der konischen Gasdüseninnenfläche (13) bilden.

3. Reinigungsvorrichtung nach Anspruch 2, **dadurch gekennzeichnet, dass** jeweils anschließend an die Schaberkante (33, 34) an der gasdüsenabgewandten Seite ein in Aufspreizrichtung vorspringender Schaberabsatz (35, 36) geformt ist, und
dass jeweils der rotierende Schaberabsatz (35, 36) für eine Reinigung der Stirnseite (15) der Gasdüsenspitze (12) dort gleitend und schabend angepresst wird.

4. Reinigungsvorrichtung nach einem der Ansprüche 1 bis 3, **dadurch gekennzeichnet, dass** die vom Schwenklager (22) ausgehenden, gasdüsenzugewandten oberen Hebelarmteile der Reinigungsarme (19, 20) wesentlich kürzer, vorzugsweise um einen Faktor 2 bis 5 kürzer als die vom Schwenklager (22) ausgehenden gasdüsenabgewandten unteren Hebelarmteile sind.

5. Reinigungsvorrichtung nach einem der Ansprüche 1 bis 4, **dadurch gekennzeichnet, dass** die Fliehkraftgewichte (23, 24) frei schwingend mit den Reinigungsarmen (19, 20), vorzugsweise am in Aufspreizrichtung abgekröpften Endbereichen mittels achsparallel zum Schwenklager (22) der Reinigungsarme (19, 20) ausgerichteten Schwenkachsen (25, 26) verbunden sind.

6. Reinigungsvorrichtung nach einem der Ansprüche 1 bis 5, **dadurch gekennzeichnet,**
**dass** der Reinigungskopf (1) als Hohlkörper topfförmig oder käfigförmig ausgebildet ist mit einer bodenseitig zentral angeordneten Antriebswelle (3),
**dass** die Reinigungsschere (18) im Innenraum des Hohlkörpers in Richtung der Drehachse (21) angeordnet ist, und
**dass** der Hohlkörper eine Oberwand (4) mit einer zentralen Einführöffnung (5) aufweist, durch die die Gasdüse (2) mit der sich konisch verjüngenden Gasdüsenspitze (12) in den Bereich der Schaberstrukturen (27, 28) der Reinigungsschere (18) in eine definierte Reinigungsposition einführbar ist.

7. Reinigungsvorrichtung nach Anspruch 6, **dadurch gekennzeichnet, dass** an der Oberwand (4) im Bereich der Einführöffnung (5) nach innen gerichtete Borsten, vorzugsweise Kunststoffborsten (6) zur Ausbildung eines rotierenden Bürstenrings (7) einer Kunststoffbürste angeordnet sind, die in der Reinigungsposition der Gasdüse (2) an der Gasdüsenaußenfläche (14) für eine flächige Reinigung durch den rotierenden Bürstenring (7) anliegen, wobei vorzugsweise die Anlagefläche des Bürstenrings (7) durch eine entsprechende Borstenlänge konisch an die Konizität der Gasdüsenspitze (12) angepasst, ist.

8. Reinigungsvorrichtung nach einem der Ansprüche 6 bis 7, **dadurch gekennzeichnet, dass** auf der Oberwand (4) ein Zentrierhilfebauteil (8) verdrehfest, das heißt nicht mitdrehend, angeordnet und gelagert ist, das eine zentrale konische, der konischen Gasdüsenaußenfläche (14) angepasste Zentrierhilfeöffnung (10) aufweist, dergestalt dass bei einer flächigen Anlage der Gasdüse (2) in der Zentrierhilfeöffnung (10) eine vorgegebene definierte Reinigungsposition erreicht ist und gehalten wird.

9. Reinigungsvorrichtung nach Anspruch 8, **dadurch gekennzeichnet, dass** in die konische Zentrierhilfeöffnung (10) formschlüssig ein Einlegetrichter (11) bestimmter Wandstärke entsprechend einem definierten Spaltabstand (32) zwischen der Zentrierhilfeöffnung (10) und einer eingeführten Gasdüse (2), einsetzbar ist, der vorzugsweise aus einer eingelegten Halbschalen (29) gebildet ist, wobei dieser Spaltabstand (32) als Einschaltpunkt für den Drehantrieb des Reinigungskopfs (1) und/oder als Programmierhöhe für die Zuführung der Gasdüse (2) zum Reinigungskopf (1) mittels eines Schweißroboters verwendet wird.

10. Reinigungsvorrichtung nach Anspruch 8 oder 9, **dadurch gekennzeichnet, dass** das Zentrierhilfebauteil (8) Bestandteil eines den Reinigungskopf (1) umgebenden, verdrehfesten Außenbehälters (40) ist, in dem der Reinigungskopf (1) rotierbar gelagert ist, wobei der Außenbehälter (40) gegebenenfalls wenigstens eine Wandöffnung (41) für eine Schmutzabführung in eine Schmutzauffangwanne (42) aufweist.

11. Reinigungsvorrichtung nach einem der Ansprüche 1 bis 10, **dadurch gekennzeichnet, dass** im Reinigungskopf (1) eine zentrale, vorzugsweise austauschbare Scherenabstützung (43) angeordnet ist, mit der bei nicht rotierendem Reinigungskopf (1) die Scherenöffnungsweite vorgegeben wird.

12. Reinigungsvorrichtung nach einem der Ansprüche 1 bis 11, **dadurch gekennzeichnet, dass** die Reinigungsvorrichtung, insbesondere der Außenbehälter (40) vertikal, in Einführrichtung der Gasdüse (2) nachgiebig, insbesondere federnd, z.B. mittels Federn (39), oder luftgelagert mit einem ortsfesten Basisteil (38) verbunden ist.

## Claims

1. Cleaning device for a mechanical cleaning of a gas nozzle (2) of a protective gas welding burner, comprising a controlled, rotatably driven cleaning head (1) having at least one co-rotating cleaning element, and
a supplying and centring device to provide a coaxial position of the gas nozzle (2) with respect to the axis of rotation (21) of the cleaning head (1) in the region of the at least one cleaning element,
**characterised in**
**that** the cleaning element is in the form of cleaning scissors (18) with two cleaning arms (19, 20), which are arranged suspended so as to form scissors that swing freely on a pivot bearing (22) transversely to the axis of rotation (21) in the cleaning head (1),
**that** on each of the cleaning arms (19, 20) are arranged centrifugal weights (23, 24) on the end regions facing away from the gas nozzle, so that with a rotation of the cleaning head the cleaning scissors (18) are spread open,
**that** the cleaning arms (19, 20) each have on the upper end regions facing towards the gas nozzle scraper structures (27, 28), which are introduced in the folded state of the cleaning scissors into the gas nozzle (2) and which, when the cleaning scissors (18) are spread open, are pressed with a rotation of the cleaning head, in a sliding and scraping manner, to the gas nozzle inner surface (13) of the gas nozzle (2) held in a rotationally fixed manner.

2. Cleaning device according to claim 1, **characterised in**
**that** the gas nozzle (2) is an extremely conically tapered gas nozzle tip (12) provided with a correspondingly undercut, conical gas nozzle inner surface (13), and that the cleaning arms (19, 20) are flat bar elements and the scraper structures (27, 28) each have a scraper edge (33, 34) oriented in a spreading direction, optionally as replaceable blade, such that the rotating scraper edges (33, 34) form, in the state introduced into the gas nozzle tip (12), a virtual rotating body for a full-surface cleaning corresponding to the conical gas nozzle inner surface (13).

3. Cleaning device according to claim 2, **characterised in**
**that** in each case a scraper section (35, 36) is formed adjacent to the scraper edge (33, 34) projecting in the spreading direction on the side facing away from the gas nozzle, and
**that** in each case the rotating scraper section (35, 36) is pressed thereupon for cleaning the end face (15) of the gas nozzle tip (12) in a sliding and scraping manner.

4. Cleaning device according to any one of claims 1 to 3, **characterised in that** the upper lever arm parts of the cleaning arms (19, 20) extending from the pivot bearing (22) and facing towards the gas nozzle are substantially shorter, preferably by a factor of 2 to 5, than the lower lever arm parts extending from the pivot bearing (22) and facing away from the gas nozzle.

5. Cleaning device according to any one of claims 1 to 4, **characterised in that** the centrifugal-force weights (23, 24) are connected in a freely swinging manner with the cleaning arms (19, 20), preferably at the end regions that are bent in the spreading direction, by means of pivot axes (25, 26) orientated in parallel with the axis of the pivot bearing (22) of the cleaning arms (19, 20).

6. Cleaning device according to any one of claims 1 to 5, **characterised in**
**that** the cleaning head (1) is designed as a cup-shaped or cage-shaped hollow body with a drive shaft (3) arranged centrally on the base,
**that** the cleaning scissors (18) in the interior of the hollow body are arranged in the direction of the axis of rotation (21), and
**that** the hollow body is provided with an upper wall (4) having a central introduction opening (5), through which the gas nozzle (2) can be introduced with the conically tapered gas nozzle tip (12) into a defined cleaning position in the region of the scraper structures (27, 28) of the cleaning scissors (18).

7. Cleaning device according to claim 6, **characterised in that** inwardly directed bristles, preferably plastic bristles (6), are arranged on the upper wall (4) in the region of the introduction opening (5), to form a rotating brush ring (7) of a plastic brush, which, in the cleaning position of the gas nozzle (2), lie against the gas nozzle outer surface (14) for surface cleaning by means of the rotating brush ring (7), wherein the contact surface of the brush ring (7) is preferably adapted conically to the conicity of the gas nozzle tip (12) by way of a corresponding bristle length.

8. Cleaning device according to any one of claims 6 to 7, **characterised in that** on the upper wall (4) there is arranged and mounted in a rotationally stable manner, i.e. not co-rotating, a centring aid part (8), which is provided with a central conical centring aid opening (10) adapted to the conical gas nozzle outer surface (14) in such a way that with a surface contact of the gas nozzle (2) in the centring aid opening (10) a predetermined, defined cleaning position is achieved and maintained.

9. Cleaning device according to claim 8, **characterised in that** an insertion funnel (11) with a specific wall thickness can be form-fittingly inserted into the conical centring aid opening (10) in accordance with a defined interval (32) between the centring aid opening (10) and an inserted gas nozzle (2), said insertion funnel being preferably formed from an inserted half shell (29), wherein this interval (32) is used as a switch-on point for the rotary drive of the cleaning head (1) and/or as programming height for supplying the gas nozzle (2) to the cleaning head (1) by means of a welding robot.

10. Cleaning device according to claim 8 or 9, **characterised in that** the centring aid part (8) is a component part of an outer container (40) surrounding in a rotationally fixed manner the cleaning head (1), the cleaning head (1) being rotatably mounted in said outer container, wherein the outer container (40) is optionally provided with at least one wall opening (41) for removal of dirt into a dirt collecting tank (42).

11. Cleaning device according to any one of claims 1 to 10, **characterised in that** in the cleaning head (1) is arranged a central, preferably replaceable scissor support (43), by means of which the opening width of the scissors is predetermined when the cleaning head (1) is not rotating.

12. Cleaning device according to any one of claims 1 to 11, **characterised in that** the cleaning device, in particular the outer container (40), is connected vertically, in the direction of introduction of the gas nozzle (2), compliantly, more particularly resiliently, e.g. by means of springs (39), or with air bearings to a stationary base part (38).

## Revendications

1. Dispositif de nettoyage pour un nettoyage mécanique d'une buse de gaz (2) d'un chalumeau de soudage à gaz de protection,
avec une tête de nettoyage (1) entraînée en rotation de manière commandée avec au moins un organe de nettoyage en rotation de manière conjointe, et
avec un système d'amenée et de centrage pour un positionnement coaxial de la buse de gaz (2) par rapport à l'axe de rotation (21) de la tête de nettoyage (1) dans la zone de l'au moins un organe de nettoyage,
**caractérisé en ce**
**que** l'organe de nettoyage est un pantographe de nettoyage (18) avec deux bras de nettoyage (19, 20), qui sont suspendus de manière à osciller librement, en forme de cisaille dans la tête de nettoyage (1) au niveau d'un palier de pivotement (22) disposé de manière transversale par rapport à l'axe de rotation (21),
**que** des poids centrifuges (23, 24) sont disposés au niveau des bras de nettoyage (19, 20), respectivement au niveau des zones d'extrémité inférieures opposées aux buses de gaz de sorte que lors d'une rotation de tête de nettoyage, le pantographe de nettoyage (18) est écarté,
**que** les bras de nettoyage (19, 20) présentent respectivement au niveau des zones d'extrémité supérieures tournées vers les buses de gaz des structures de grattage (27, 28), qui sont introduites dans la buse de gaz (2) dans l'état replié du pantographe de nettoyage et qui sont pressées, tout en coulissant et en grattant, contre la face intérieure de buse de gaz (13) de la buse de gaz (2) maintenue de manière solidaire en rotation lors d'un écartement du pantographe de nettoyage (18) du fait d'une rotation de tête de nettoyage.

2. Dispositif de nettoyage selon la revendication 1, **caractérisé en ce**
**que** la buse de gaz (2) présente une pointe de buse de gaz (12) se rétrécissant extrêmement de manière conique avec une face intérieure de buse de gaz (13) conique contre-dépouillée de manière correspondante, et
**que** les bras de nettoyage (19, 20) sont des éléments de grattage plats et les structures de grattage (27, 28) présentent respectivement une arête de grattage (33, 34) dirigée dans la direction d'écartement, éventuellement sous la forme d'une lame remplaçable, de telle manière
**que** les arêtes de grattage (33, 34) rotatives forment, dans l'état introduit dans la pointe de buse de gaz (12), pour un nettoyage de toute la surface, un corps de rotation virtuel conformément à la face intérieure de buse de gaz (13) conique.

3. Dispositif de nettoyage selon la revendication 2, **caractérisé en ce qu'**un retrait de grattage (35, 36) faisant saillie dans la direction d'écartement est formé respectivement dans le prolongement de l'arête de grattage (33, 34) au niveau du côté opposé à la buse de gaz, et
que respectivement le retrait de grattage (35, 36) rotatif y est appliqué par pression, tout en glissant et grattant, pour un nettoyage du côté frontal (15) de la pointe de buse de gaz (12).

4. Dispositif de nettoyage selon l'une quelconque des revendications 1 à 3,
**caractérisé en ce que** les parties de bras de levier supérieures, partant du palier de pivotement (22), tournées vers les buses de gaz, des bras de nettoyage (19, 20) sont sensiblement plus courtes, de préférence plus courtes d'un facteur de 2 à 5 que les parties de bras de levier inférieures partant du palier de pivotement (22), opposées aux buses de gaz.

5. Dispositif de nettoyage selon l'une quelconque des revendications 1 à 4,
**caractérisé en ce que** les poids centrifuges (23, 24) sont reliés tout en oscillant librement aux bras de nettoyage (19, 20), de préférence au niveau des zones d'extrémité coudées dans la direction d'écartement au moyen d'axes de pivotement (25, 26) orientés de manière parallèle à l'axe par rapport au palier de pivotement (22) des bras de nettoyage (19, 20).

6. Dispositif de nettoyage selon l'une quelconque des revendications 1 à 5,
**caractérisé en ce**
**que** la tête de nettoyage (1) est réalisée en forme de pot ou en forme de cage sous la forme d'un corps creux avec un arbre d'entraînement (3) disposé de manière centrale côté fond,
**que** le pantographe de nettoyage (18) est disposé dans l'espace intérieur du corps creux en direction de l'axe de rotation (21), et
**que** le corps creux présente une paroi supérieure (4) avec une ouverture d'introduction (5) centrale, par laquelle la buse de gaz (2) peut être introduite dans une position de nettoyage définie par la pointe de buse de gaz (12) se rétrécissant de manière conique dans la zone des structures de grattage (27, 28) du pantographe de nettoyage (18).

7. Dispositif de nettoyage selon la revendication 6, **caractérisé en ce que** sont disposés au niveau de la paroi supérieure (4), dans la zone de l'ouverture d'introduction (5), des poils dirigés vers l'intérieur, de préférence des poils en plastique (6) servant à réaliser un anneau de balayage (7) rotatif d'une brosse en plastique, qui reposent, dans la position de nettoyage de la buse de gaz (2), au niveau de la face extérieure de buse de gaz (14) pour un nettoyage à plat par l'anneau de brossage (7) rotatif, dans lequel de préférence la face d'appui de l'anneau de brossage (7) est adaptée de manière conique à la conicité de la pointe de buse de gaz (12) par une longueur de poils correspondante.

8. Dispositif de nettoyage selon l'une quelconque des revendications 6 et 7,
**caractérisé en ce qu'**est disposé et monté, sur la paroi supérieure (4), de manière solidaire en rotation, en d'autres termes de manière à ne pas tourner conjointement, un composant d'aide de centrage (8), qui présente une ouverture d'aide de centrage (10) centrale conique adaptée à la face extérieure de buse de gaz (14) conique de telle manière que lors d'un appui à plat de la buse de gaz (2) dans l'ouverture d'aide de centrage (10), une position de nettoyage définie spécifiée est atteinte et conservée.

9. Dispositif de nettoyage selon la revendication 8, **caractérisé en ce que** peut être insérée, dans l'ouverture d'aide de centrage (10) conique, par complémentarité de forme, une trémie d'insertion (11) présentant une épaisseur de paroi donnée conformément à un entrefer (32) défini entre l'ouverture d'aide de centrage (10) et la buse de gaz (2) introduite, qui est formée de préférence à partir d'une demi-coque (29) insérée, dans lequel ledit entrefer (32) est utilisé en tant que point d'activation pour l'entraînement en rotation de la tête de nettoyage (1) et/ou en tant que hauteur de programmation pour l'amenée de la buse de gaz (2) vers la tête de nettoyage (1) au moyen d'un robot de soudage.

10. Dispositif de nettoyage selon la revendication 8 ou 9, **caractérisé en ce que** le composant d'aide de centrage (8) fait partie intégrante d'un contenant extérieur (40) solidaire en rotation entourant la tête de nettoyage (1), dans lequel la tête de nettoyage (1) est montée de manière rotative, dans lequel le contenant extérieur (40) présente éventuellement au moins une ouverture de paroi (41) pour une évacuation de saletés dans un bac collecteur de saletés (42).

11. Dispositif de nettoyage selon l'une quelconque des revendications 1 à 10,
**caractérisé en ce qu'**est disposé dans la tête de nettoyage (1) un appui de pantographe (43) central de préférence échangeable, avec lequel la largeur d'ouverture de pantographe est spécifiée lorsque la tête de nettoyage (1) ne tourne pas.

12. Dispositif de nettoyage selon l'une quelconque des revendications 1 à 11,
**caractérisé en ce que** le dispositif de nettoyage, en particulier le contenant extérieur (40), est relié de manière verticale, de manière souple dans la direction d'introduction de la buse de gaz (2), en particulier sur ressorts, par exemple au moyen de ressorts (39), ou sur coussin d'air, à une partie de base (38) stationnaire.
